# EUROPÄISCHE PATENTANMELDUNG

(11) **EP 2 194 335 A1**
(43) Veröffentlichungstag der Anmeldung: **09.06.2010**
(21) Anmeldenummer: 08021271.5
(22) Anmeldetag: 08.12.2008
(51) Int. Cl.: F24J 2/52

(54) **Befestigungssystem für einen solartechnischen Kollektor**

(71) Anmelder: GREENoneTEC, 9300 St. Veit/Glan (AT)
(72) Erfinder: Obermann, Wolfgang, 9061 Wölfnitz (AT); Ogris, Adolf, 9020 Klagenfurt (AT); Koschier, Günter, 9314 Launsdorf (AT); Hochreiter, Erwin, 9020 Klagenfurt (AT)
(74) Vertreter: Becker, Thomas

(57) **Zusammenfassung**

Befestigungssystem für einen solartechnischen Kollektor (40) mit folgenden Merkmalen: einem ersten Befestigungsbügel (20) mit einem an einem ersten Ende eines Grundkörpers (22) angeordneten ersten U-förmigen Abschnitt (24) zum kraftschlüssigen Aufstecken auf eine korrespondierende Schiene (10), und einem an einem zweiten Ende des Grundkörpers (22) angeordneten zweiten Abschnitt zur Festlegung eines Randbereichs (40r) des Kollektors (40) zwischen dem Grundkörper (22) und einer im Abstand angeordneten Klemmfläche (26k) eines am Grundkörper (22) befestigbaren Klemmelements (26); einem zweiten Befestigungsbügel (50) mit einem an einem zweiten Ende eines Grundkörpers angeordneten zweiten U-förmigen Abschnitt zum kraftschlüssigen Aufstecken auf die Schiene (10), und einem an einem ersten Ende des Grundkörpers angeordneten ersten Abschnitt (50u) zur Festlegung an einem Gebäudeteil.

## Beschreibung

Die Erfindung betrifft ein Befestigungssystem für einen solartechnischen Kollektor.

Der Gegenstand der Erfindung kann Bestandteil eines komplexen Installations- und Befestigungssystems für solartechnische Kollektoren (insbesondere Warmwasser- und Photovoltaik-Kollektoren) sein, die beispielsweise auf einem Dach, in einem Dach, auf oder in einer Gebäudefassade installiert werden.

Die genannten Kollektoren weisen häufig ein flaches quaderförmiges Gehäuse mit Abmessungen (Breite, Länge, Höhe) von ca. 100 x 200 x 10 cm auf. Sie sind als so genannte Rahmenkollektoren oder Wannenkollektoren bekannt.

Bisherige Befestigungssysteme sind weitestgehend starr und können die lokalen konstruktiven Vorgaben nicht berücksichtigen. Im Ergebnis werden Kollektoren häufig schief und optisch unzureichend montiert.

Aufgabe der Erfindung ist es, ein konstruktiv einfaches Befestigungssystem für die genannten Kollektoren anzugeben, das möglichst ohne kompliziertes Werkzeug schnell montiert und vor Ort in die gewünschte Montageposition gebracht werden kann.

Zur Lösung dieser Aufgabe sieht die Erfindung ein Befestigungssystem für einen solartechnischen Kollektor mit folgenden Merkmalen vor:
- einem ersten Befestigungsbügel mit
- einem an einem ersten Ende eines Grundkörpers angeordneten ersten U-förmigen Abschnitt zum kraftschlüssigen Aufstecken auf eine korrespondierende Schiene, und
- einem, an einem zweiten Ende des Grundkörpers angeordneten zweiten Abschnitt zur Festlegung eines Randbereichs des Kollektors zwischen dem Grundkörper und einer im Abstand angeordneten Klemmfläche eines am Grundkörper befestigbaren Klemmelementes, sowie
- einem zweiten Befestigungsbügel mit
- einem, an einem zweiten Ende eines Grundkörpers angeordneten zweiten U-förmigen Abschnitt zum kraftschlüssigen Aufstecken auf die Schiene, und
- einem an einem ersten Ende des Grundkörpers angeordneten ersten Abschnitt zur Festlegung an einem Gebäudeteil.

Kernstück des Befestigungssystems sind demnach eine Schiene, auf die zwei Befestigungsbügel ohne Werkzeug aufgesteckt werden können, wobei der eine Befestigungsbügel zur Montage an einem Gebäude dient und der andere Bügel zur Aufnahme und Festlegung des Kollektors.

Der erste Befestigungsbügel, der zur Montage des Kollektors dient, ermöglicht eine Bewegung/Anpassung mindestens in zwei Richtungen des Koordinatensystems, nämlich einmal in Axialrichtung der Schiene und zum anderen parallel zur Oberfläche des Kollektors, wobei der entsprechende Kollektorrand senkrecht zur Axialrichtung der Schiene verlaufen kann.

Im Wesentlichen analog gilt dies auch für den zweiten Befestigungsbügel mit der Maßgabe, dass der U-förmige Abschnitt entlang der Schiene in Axialrichtung verstellt werden kann.

Der Kollektor wird mit seinem Randbereich am ersten Befestigungsbügel aufgenommen und festgelegt, und zwar zwischen einer Klemmfläche des Klemmelementes und einem im Abstand dazu angeordneten Auflager, welches Bestandteil des Grundkörpers ist.

Das Klemmelement selbst ist dabei so gestaltet, dass senkrecht zur Oberfläche (zum Rand) des Kollektors eine gewisse Verstellbarkeit gegeben ist, um so in einer dritten Richtung des Koordinatensystems Toleranzen ausgleichen zu können. Dazu bietet die Erfindung in verschiedenen Ausführungsformen alternative Lösungen:

Eine Variante sieht vor, dass die Klemmfläche des Klemmelementes einen Teil eines in einer Seitenansicht L-förmigen Abschnitts des Klemmelementes bildet. Diese Klemmfläche kann beispielsweise mit einer elastischen Dichtung belegt sein. Wird die Klemmfläche gegen den Kollektorrand gedrückt, wird die Dichtung entsprechend komprimiert. Dadurch wird der kraftschlüssige Sitz des Kollektors/Kollektorrandes im Befestigungsbügel optimiert und ein Verrutschen der Teile relativ zueinander verhindert.

Eine weitere Maßnahme besteht darin, dass das Klemmelement auf dem Grundkörper verschraubt werden kann. Je nachdem, wie weit die Schraube hineingedreht wird, kann die Position des Klemmelementes verändert werden, oder anders ausgedrückt: der Abstand der Klemmfläche zum Kollektorrand lässt sich auf diese Weise den lokalen Gegebenheiten anpassen.

Um mechanische Spannungen zu vermeiden ist es vorteilhaft, wenn die Klemmfläche des Klemmelementes in einer Montageposition im Wesentlichen parallel zur korrespondierenden Oberfläche des Kollektors verläuft. Diese Maßnahme kann unterstützt werden, indem das Klemmelement zwei im Abstand zueinander angeordnete Stützschenkel aufweist, die in definierter Zuordnung am Grundkörper aufliegen, wenn das Klemmelement am Grundkörper befestigt wird, beispielsweise verschraubt wird.

Die Montage dieses Befestigungsbügels an der Schiene erfolgt über den ersten U-förmigen Abschnitt. Nach einer Ausführungsform übergreift dieser U-förmige Abschnitt in seiner Montageposition die Schiene von oben, oder anders ausgedrückt: der Befestigungsbügel wird einfach von oben auf die Schiene aufgesetzt/aufgedrückt und/oder die Schiene innerhalb des U-förmigen Abschnittes in die gewünschte Montageposition gebracht.

Diese Ausführungsform sieht vor, dass die Schiene aus einem Profilkörper besteht, der zwei im Abstand verlaufende, weitestgehend plan parallele Seitenflächen aufweist, die außenseitig von zwei entgegengesetzt gekrümmten Kreisringabschnitten verbunden sind.

In diesem Fall entsprechen die Kreisringabschnitte hinsichtlich ihrer Krümmung der Formgebung von Schenkeln des U-förmigen Abschnittes, wobei die U-förmigen Schenkel so gestaltet sind, dass sie die Schiene in einem Winkelbereich von über 180° umgreifen, um die gewünschte werkzeugfreie Festlegung zu ermöglichen.

Dabei kann mindestens eine der Seitenflächen und Kreisringabschnitte außenseitig mindestens eine Anschlagfläche zur Festlegung der Schiene in einen zugehörigen U-förmigen Abschnitt eines Befestigungsbügels aufweisen. Bei der Montage wird die Schiene zunächst etwa 90° verdreht zur Montageposition in den U-förmigen Abschnitt des zugehörigen Befestigungsbügels gebracht und dann um 90° gedreht, bis die Endposition an der genannten Anschlagfläche erreicht ist.

Umgekehrt kann auch mindestens einer der U-förmigen Abschnitte eines Befestigungsbügels innenseitig eine Anschlagfläche zur Festlegung der Schiene aufweisen. Der Effekt ist der gleiche.

Obwohl sich auf diese Weise eine einfache Verbindung von Befestigungsbügel und Schiene ergibt, kann es zweckmäßig oder notwendig sein, zusätzliche Sicherungsmaßnahmen zu ergreifen. Beispielsweise können Windlasten im Bereich von Kollektoren, die auf einem Dach montiert werden, so groß werden, dass die genannte kraftschlüssige Verbindung nicht ausreichen könnte. Für diesen Zweck sieht die Erfindung als zusätzliche Sicherungsmaßnahme vor, dass Schiene und Befestigungsbügel zusätzlich miteinander verschraubt werden. Dazu kann die Schiene mindestens eine in Axialrichtung der Schiene verlaufende äußere Längsnut aufweisen, und zwar gegenüber mindestens einem Schenkel mindestens eines U-förmigen Abschnittes mindestens eines Befestigungsbügels.

Auf diese Weise kann durch einen Schenkel eines Befestigungsbügels eine Schraube geführt werden, die anschließend im Bereich der Längsnut gegenüber der Schiene festgelegt wird. Es ist selbstverständlich, dass die Längsnut dazu entsprechend dimensioniert sein muss, beispielsweise einen Querschnitt aufweist, der kleiner als der äußere Schraubendurchmesser ist. Eine weitere Stabilisierungsmaßnahme besteht darin, die Schiene mit einer Leiste auszubilden, die in der Montageposition der Schiene in Axialrichtung verläuft und nach oben vorsteht. Ein korrespondierendes Gegenstück, also eine Nut, kann dazu im Bereich des Befestigungsbügels ausgebildet werden.

Weitere Merkmale der Erfindung ergeben sich aus den Merkmalen der Unteransprüche sowie den sonstigen Anmeldungsunterlagen.

Als zusätzliche Sicherungsmaßnahme wird vorgeschlagen, die Schiene so auszubilden, dass sie mit einem aufgelegten Kollektor eine kraftschlüssige Verbindung ergibt. Dies kann durch eine Nut in der Schiene erfolgen, in die eine Leiste oder ein Stift eingreift, die/der von der korrespondierenden Seite des Kollektors absteht (oder umgekehrt: mit Nut im Kollektor und Vorsprung auf der Schiene).

Die Erfindung wird nachstehend anhand eines Ausführungsbeispieles näher erläutert. Dabei enthält dieses Ausführungsbeispiel auch allgemein gültige Merkmale. In den Figuren zeigen - in schematisierter Darstellung -
Figur 1: eine perspektivische Ansicht eines Befestigungssystems
Figur 2: eine Verbindung von Schiene und erstem Befestigungsbügel im Schnitt
Figur 3: eine Seitenansicht des ersten Befestigungsbügels im Montagezustand.

In den Figuren sind gleiche oder gleich wirkende Bauteile mit gleichen Bezugszeichen dargestellt.

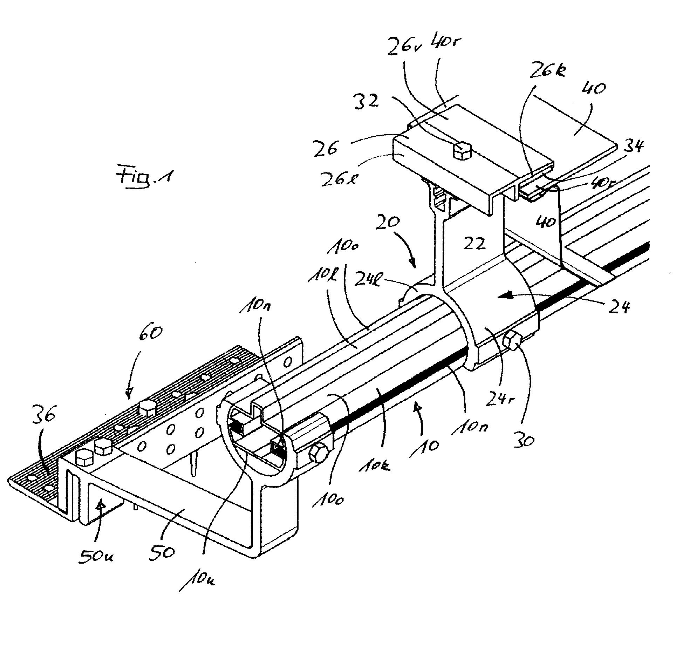

Figur 1 zeigt eine Schiene 10 in Form eines stranggepressten Profilhohlkörpers. Dabei werden zwei parallel zueinander im Abstand verlaufende Seitenflächen 100, 10u außenseitig von zwei entgegengesetzt gekrümmten Kreisringabschnitten 10k verbunden. Von der oberen Seitenfläche 10o ist mittig, in Axialrichtung der Schiene 10, eine Leiste 10l ausgeformt. Im Bereich der Kreisringabschnitte 10k ist jeweils eine axial verlaufende äußere Längsnut 10n ausgeformt, die entsprechend parallel zur Leiste 101 verläuft.

Rechts in Figur 1 ist ein erster Befestigungsbügel 20 zu erkennen. An einem ersten Ende eines Grundkörpers 22 ist ein erster U-förmiger Abschnitt 24 angeordnet, dessen beide Schenkel 241, 24r kreisbogenartig gekrümmt sind, entsprechend der Krümmung der Kreisringabschnitte 10k. Die Schenkel 241, 24r sind so lang, dass sie die Längsnut 10n überdecken und insgesamt einen Winkel von über 180° beschreiben.

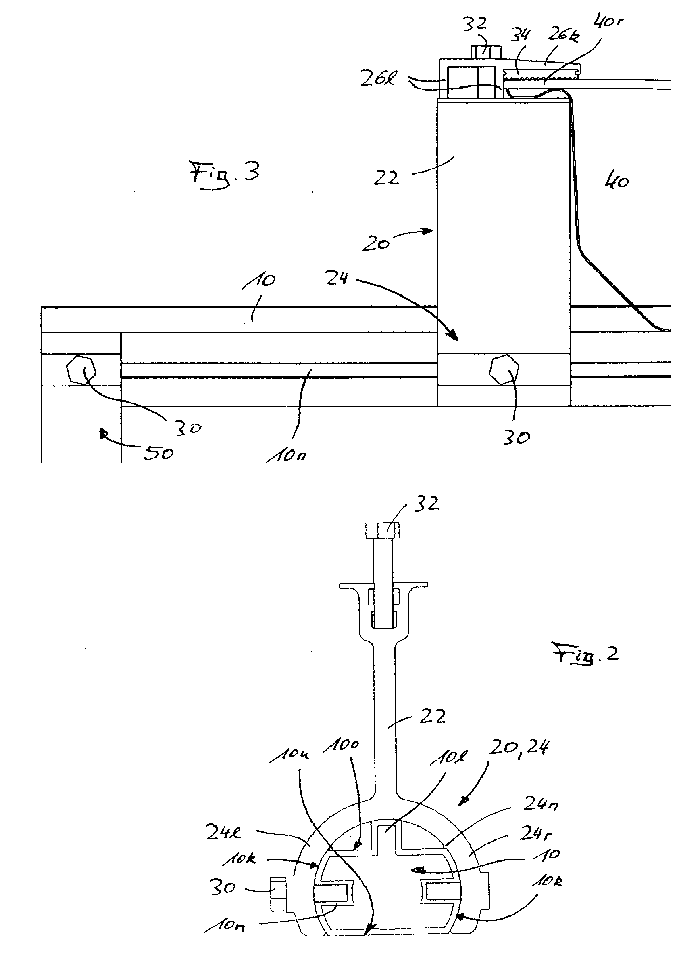

Um die in Figur 1 dargestellte Montageposition zu erreichen, wird die Schiene 10 in einer Position zwischen die Schenkel 241, 24r geführt, die etwa 90° versetzt zu der dargestellten Position ist. Anschließend wird die Schiene 10 in die dargestellte Montageposition gedreht, wobei die Seitenfläche 10o gegen eine Nase 24n auf der Innenseite des Schenkels 24r stößt, wie in Figur 2 dargestellt.

Dabei zeigt Figur 2 die Montageposition, bei der die Kreisringabschnitte 10k flächig gegen die Schenkel 241, 24r anliegen und auch die Leiste 10l mit ihrer oberen leicht gekrümmten Stirnfläche flächig gegen die korrespondierende Fläche des U-förmigen Abschnitts 24 ansteht.

Figur 2 lässt erkennen, dass zusätzlich Schrauben 30 durch die Schenkel 241, 24r in den Bereich der Längsnuten 10n durchgeführt sind, wo sie entsprechende Gewinde selbst schneiden und damit zu einer zusätzlichen Verbindung von Befestigungsbügel 20 und Schiene 10 beitragen.

Am gegenüberliegenden Ende des Grundkörpers 22 ist ein zweiter Abschnitt des Befestigungsbügels 20 zu erkennen. Dieser Abschnitt umfasst ein Klemmelement 26, welches in etwa senkrecht zur Schiene 10 beziehungsweise zum flächigen Grundkörper 22 verläuft. Das Klemmelement 26 weist eine in der Figur nach rechts vorstehende Klemmfläche 26k auf einer Unterseite eines vorstehenden Abschnittes 26v auf. Im Übrigen stehen zwei Leisten 261 senkrecht nach unten ab und liegen auf dem Grundkörper 22 auf, wobei das Klemmelement 26 über eine Schraube 32 im Grundkörper 22 fixiert ist, der zu diesem Zweck in seinem oberen Abschnitt nach Art eines U-Profils gestaltet ist, wie auch Figur 2 zu entnehmen ist.

Gegen die Klemmfläche 26k liegt eine Dichtung 34 an, die kompressibel ist, um Toleranzen gegenüber einem Randabschnitt 40r eines nur partiell dargestellten Kollektors 40 auszugleichen. Wie insbesondere Figur 3 zeigt, liegt der Kollektor 40 mit seinem Randabschnitt 40r auf dem Grundkörper 22 auf. Der Randabschnitt 40r ist zwischen dem Grundkörper 22 und der Klemmfläche 26k eingespannt. In der dargestellten Montageposition liegt der Randabschnitt 40r im Übrigen gegen eine korrespondierende Leiste 261 des Klemmelementes 26 an. Mit einem (nicht dargestellten) Boden liegt der Kollektor 40 auf der Schiene 10 auf.

Die Schiene 10 wird über einen zweiten Befestigungsbügel 50 an einem Gebäudeabschnitt 60 befestigt. Dieser zweite Befestigungsbügel 50 weist einen Endabschnitt auf, der analog zum U-förmigen Abschnitt 24 des ersten Befestigungsbügels 20 gestaltet ist. Auf die Beschreibung dazu wird Bezug genommen.

Auch die Montage von Befestigungsbügel 50 und Schiene 10 ist analog der Verbindung von Befestigungsbügel 20 und Schiene 10.

Beim dargestellten Ausführungsbeispiel weist der zweite Befestigungsbügel 50 an seinem gegenüberliegenden Ende einen U-förmigen Abschnitt 50u auf, der auf einem L-förmigen Winkel 36 aufgeschraubt ist, der wiederum fest am Gebäude 60 montiert ist.

Die vorstehende Beschreibung und zeichnerische Darstellung macht deutlich, dass der Befestigungsbügel 50 in Axialrichtung der Schiene 10 verstellbar ist. Auch der Befestigungsbügel 20 kann entlang der Schiene 10 analog verstellt werden. Zwischen Kollektor 40 und Befestigungsbügel 20 ergibt sich eine Verschiebung senkrecht zur Schiene 10 entlang der Klemmfläche 26k, aber auch in gewissen Grenzen senkrecht (vertikal) zur Schiene 10 über die Dichtung 34 sowie die Schraubverbindung 32.

Das Befestigungssystem kann mit Ausnahme der genannten Schrauben ohne Werkzeug montiert werden.

## Patentansprüche

1. Befestigungssystem für einen solartechnischen Kollektor (40) mit folgenden Merkmalen:
1.1einem ersten Befestigungsbügel (20) mit
1.1.1 einem an einem ersten Ende eines Grundkörpers (22) angeordneten ersten U-förmigen Abschnitt (24) zum kraftschlüssigen Aufstecken auf eine korrespondierende Schiene (10), und
1.1.2 einem an einem zweiten Ende des Grundkörpers (22) angeordneten zweiten Abschnitt zur Festlegung eines Randbereichs (40r) des Kollektors (40) zwischen dem Grundkörper (22) und einer im Abstand angeordneten Klemmfläche (26k) eines am Grundkörper (22) befestigbaren Klemmelements (26),
1.2 einem zweiten Befestigungsbügel (50) mit
1.2.1 einem an einem zweiten Ende eines Grundkörpers angeordneten zweiten U-förmigen Abschnitt zum kraftschlüssigen Aufstecken auf die Schiene (10), und
1.2.2 einem an einem ersten Ende des Grundkörpers angeordneten ersten Abschnitt (50u) zur Festlegung an einem Gebäudeteil.

2. Befestigungssystem nach Anspruch 1, bei dem die Klemmfläche (26k) des Klemmelements (26) in einer Montageposition im Wesentlichen parallel zur korrespondierenden Oberfläche des Kollektors (40) verläuft.

3. Befestigungssystem nach Anspruch 1, bei dem die Klemmfläche (26k) des Klemmelements (26) einen Teil eines in einer Seitenansicht L-förmigen Abschnitts des Klemmelements (26) bildet.

4. Befestigungssystem nach Anspruch 1, bei dem zwischen Klemmfläche (26k) und Kollektor (40) eine flexible Dichtung (34) angeordnet ist.

5. Befestigungssystem nach Anspruch 1, dessen erster U-förmiger Abschnitt (24) in seiner Montageposition die Schiene (10) von oben vertikal übergreift.

6. Befestigungssystem nach Anspruch 1, dessen Schiene (10) aus einem Profilkörper besteht, der zwei im Abstand verlaufende, weitestgehend planparallele Seitenflächen (10o, 10u) aufweist, die außenseitig von zwei entgegengesetzt gekrümmten Kreisringabschnitten (10k) verbunden sind.

7. Befestigungssystem nach Anspruch 6, wobei mindestens eine der Seitenflächen (10o, 10u) und Kreisringabschnitte (10k) außenseitig mindestens eine Anschlagfläche zur Festlegung der Schiene (10) in einem zugehörigen U-förmigen Abschnitt eines Befestigungsbügels (20,50) aufweist.

8. Befestigungssystem nach Anspruch 6, wobei mindestens einer der U-förmigen Abschnitte eines Befestigungsbügels (20,50) innenseitig eine Anschlagfläche (24n) zur Festlegung der Schiene (10) in dem zugehörigen U-förmigen Abschnitt (24) aufweist.

9. Befestigungssystem nach Anspruch 1, dessen Klemmelement (26) auf dem Grundkörper (22) durch Verschraubung befestigbar ist.

10. Befestigungssystem nach Anspruch 1, dessen Schiene (10) mindestens eine in Axialrichtung der Schiene (10) verlaufende äußere Längsnut (10n) gegenüber mindestens einem Schenkel (241, 24r) mindestens eines U-förmigen Abschnitts (24) aufweist.

11. Befestigungssystem nach Anspruch 1, bei dem mindestens ein Befestigungsbügel (24r, 241) mit der Schiene (10) verschraubbar ist.

12. Befestigungssystem nach Anspruch 1, dessen Schiene (10) auf einer Seitenfläche (10o), die in einer Montageposition der Schiene (10) oben liegt, eine nach oben vorstehende Leiste (10l) aufweist.
